# EUROPÄISCHE PATENTSCHRIFT

(11) **EP 2 920 454 B1**
(45) Veröffentlichungstag und Bekanntmachung des Hinweises auf die Patenterteilung: **07.06.2017**
(21) Anmeldenummer: 13789485.3
(22) Anmeldetag: 04.11.2013
(51) Int. Cl.: F03B 17/06, F03B 13/26

(54) **VORRICHTUNG ZUR NUTZBARMACHUNG KINETISCHER ENERGIE EINES STRÖMENDEN MEDIUMS**
DEVICE FOR UTILISATION OF KINETIC ENERGY OF A FLOWING MEDIUM
DISPOSITIF POUR EXPLOITER L'ÉNERGIE CINÉTIQUE D'UN FLUIDE EN ÉCOULEMENT

(30) Priorität: 07.11.2012 DE 102012021674
(43) Veröffentlichungstag der Anmeldung: 23.09.2015
(73) Patentinhaber: Atlantisstrom GmbH&Co. KG, 22889 Tangstedt (DE)
(72) Erfinder: JANSSEN, Kai-Ude, 38440 Wolfsburg (DE)
(74) Vertreter: Stornebel, Kai
(86) Internationale Anmeldenummer: PCT/EP2013/003302
(87) Internationale Veröffentlichungsnummer: WO 2014/072036

(56) Entgegenhaltungen:
- EP-A2- 2 128 436
- WO-A2-2011/028187
- GB-A- 2 450 077
- US-A- 6 109 863

## Beschreibung

Die Erfindung betrifft eine Vorrichtung zur Nutzbarmachung kinetischer Energie eines strömenden Mediums mit um eine Drehachse an einer Welle gelagerten, axial zueinander beabstandeten Tragkörpern, zwischen denen Druckflächen angeordnet sind, die um eine Achse an die Tragkörpern schwenkbar gelagert sind und sich an Anschlägen, die die Schwenkbewegung begrenzen, abstützen. Die Vorrichtung ist insbesondere zum Einsatz als Gezeitenkraftwerk geeignet, bei dem alternierende Strömungsrichtungen vorliegen.

Es ist bekannt, dass solche Vorrichtungen in Gewässern eingesetzt werden, um die Energie des bewegten Wassers, also einer Strömung, in elektrischen Strom umzuwandeln. Diese Strömungen resultieren zum Beispiel aus den Gezeiten, also Ebbe und Flut, oder Strömungen, wie sie auch in Flüssen zu finden sind.

Aus der DE 24 34 937 ist ein Unterwasser-Stromerzeuger bekannt, der eine Turbine mit drehbaren Druckflächen aufweist, die an einem Anschlag anliegen und somit aus der Strömung des Wassers eine Rotation erzeugen können. Wenn diese Druckflächen nicht an den Anschlägen anliegen, richten diese sich zu der Strömung des Wassers aus und bieten diesem dadurch einen geringen Widerstand. Weiterhin ist eine verstellbare Abweisplatte beschrieben, die vor der Turbine angeordnet ist und den Wasserstrom so ablenkt, dass dieser auf diejenige Seite gelenkt wird, an der sich die Druckflächen am Anschlag befinden.

Die GB 2 190 144 A betrifft eine Wasserradvorrichtung mit einer drehbaren, horizontal ausgerichteten Trommel, die an dem Meeresboden verankert ist. Der Trommel vorgelagert kann ein Ableitblech angeordnet sein, um die maximale Wasserkraft auf die Druckflächen aufzubringen.

Die EP 2 128 436 A2 betrifft eine wasserkraftbetriebene Strömungsturbine mit verschwenkbaren und zurückziehbaren Schaufeln, um einen Kern anzutreiben. Die Schaufeln können sich in ihrer passiven Phase um den Kern anlegen und werden in ihrer aktiven, den Kern antreibenden Phase aufgestellt und stellen einen Strömungswiderstand bereit.

Die US 6,109,863 A betrifft eine im Wasser versenkbare Vorrichtung zur Erzeugung elektrischer Energie aus einer Fluidströmung im Meer oder in einem Fluss. Zwei gegenüberliegende Rotoren mit einer Vielzahl von radial gerichteten, winklig zueinander beabstandeten Flügeln sind vorgesehen. Jeder Flügel hat eine Vielzahl drehbarer Teilflügel, sodass das strömende Fluid auf einen geschlossenen oder starren Flügel auftritt, um eine Drehung zu ermöglichen, wobei in der rückwärtigen Drehbewegung die Teilflügel in einer geöffneten Stellung befindlich sind, sodass kein oder ein geringer Strömungswiderstand bereitgestellt wird.

Die WO 2011/028187 A2 betrifft eine Strömungsturbine mit sich drehenden Turbinenschaufeln, die schwenkbar in einem Rotor zwischen zwei axial zueinander beabstandeten Tragkörpern gelagert sind. Der Rotor dreht um eine Rotorachse, die Turbinenschaufeln stützten sich an Anschlägen ab, die die Schwenkbewegung um die jeweiligen Schwenkachsen zu begrenzen. Begrenzungselemente bei der beabstandet zu den Turbinenschaufeln sind als Pontons ausgebildet.

Die bekannten Vorrichtungen sind komplex und sind nur eingeschränkt als Gezeitenkraftwerk einzusetzen. Aufgabe der vorliegenden Erfindung ist es, eine Vorrichtung bereitzustellen, die vielseitig einsetzbar ist, effizient die Strömungsenergie umwandelt und kostengünstig herstellbar ist.

Erfindungsgemäß wird diese Aufgabe durch eine Vorrichtung mit den Merkmalen des Hauptanspruches gelöst, vorteilhafte Ausgestaltungen und Weiterbildungen der Erfindung sind in den Unteransprüchen, der Beschreibung und den Figuren offenbart.

Die erfindungsgemäße Vorrichtung zur Nutzbarmachung kinetischer Energie eines strömenden Mediums mit um eine Drehachse an einer Welle gelagerten, axial zueinander beabstandeten Tragkörpern, zwischen denen Druckflächen angeordnet sind, die um eine Achse an den Tragkörpern schwenkbar gelagert sind und sich an Anschlägen, die die Schwenkbewegung begrenzen, abstützen, sieht vor, dass radial beabstandet zu den Druckflächen eine als Auftriebskörper ausgebildete Strömungsleiteinrichtung angeordnet ist, die zusammen mit den Druckflächen eine den Strömungsquerschnitt zwischen den Druckflächen und der Strömungsleiteinrichtung verengende Kontur ausbildet. Die Erfindung nutzt einen Teil des notwendigen Gestells, um eine verbesserte Strömungssituation für die Druckflächen zu erzielen. Durch die sich über den Raum zwischen den Tragkörpern erstreckende, radial zu den Druckflächen beabstandete und als Auftriebskörper ausgebildete Strömungsleiteinrichtung, die zusammen mit den Druckflächen eine den Strömungsquerschnitt zwischen den Druckflächen und der Strömungsleiteinrichtung verengenden Kontur ausbildet, wird die Strömungsgeschwindigkeit des Wassers erhöht. Die Strömungsleiteinrichtung ist als Auftriebskörper ausgeführt, so dass sie sich während des Betriebes im Wasser stets oberhalb der Drehachse befindet. Durch den relativ großen Abstand zwischen dem Auftriebsschwerpunkt und dem Gewichtsschwerpunkt ist es möglich, eine große Stabilität der in der Strömung schwimmenden Vorrichtung zu erreichen. Die Ausrichtung der Strömungsleiteinrichtung wird erfindungsgemäß dazu genutzt, dass das Wasser in einen Bereich gelenkt wird, in dem die Druckflächen an ihren Anschlägen anliegen und somit die Strömungskraft in die Rotation übertragen. Der Auftrieb kann durch die Verwendung von Materialien oder Materialkombinationen mit einer geringeren Dichte als die des umliegenden Mediums oder durch mit Luft oder anderen Gasen gefüllte Hohlkörper erzeugt werden. Die Strömungsleiteinrichtung ist symmetrisch zu einer Ebene, die die Drehachse enthält und im Wesentlichen senkrecht zu der Strömungsrichtung des Mediums steht. Dies ist besonders bei der Nutzung von Gezeiten von Vorteil, denn bei der Nutzung der Gezeitenströmung kehrt sich die Strömungsrichtung periodisch um. Durch die symmetrische Ausformung dieser Strömungsleiteinrichtung ist der dadurch erzielte Effekt bei beiden Strömungsrichtungen nutzbar, ohne dass eine Verstellung von Komponenten an der Vorrichtung durchgeführt werden müsste.

Als bevorzugte Ausführungsform kann der Auftriebskörper eine Wölbung in Richtung auf die Drehachse aufweisen. Durch diese Wölbung kann über den Bernoulli-Effekt die Strömungsgeschwindigkeit an der Seite der Druckflächen erhöht werden.

Die Strömungsleiteinrichtung kann sich über beide Tragkörper hinweg erstrecken und darüber hinausragen, so dass die Strömungsleiteinrichtung und der Auftriebskörper länger als der Abstand der beiden Tragkörper zueinander ist. Dadurch kann die Strömung in einem größeren Bereich beeinflusst werden und die Strömungsverhältnisse im Bereich der Druckflächen vergleichsmäßigen, da auch an den Randbereichen und an den Außenseiten der Tragkörper eine Erhöhung der Strömungsgeschwindigkeit bewirkt wird.

Von der Strömungsleiteinrichtung können Ausleger abkragen, an denen die Welle gelagert ist. So ist die Strömungsleiteinrichtung in Bezug auf die Welle frei drehbar. Diese Ausleger können auch als Wände ausgebildet sein, um eine zusätzliche Strömungsbeeinflussung in Richtung auf die Druckflächen und eine automatische Ausrichtung der Vorrichtung in die Strömung bewirken zu können. Ebenfalls ist vorgesehen, dass die Wände als Hohl- bzw. Auftriebskörper ausgebildet sein können. So kann ein weiterer Auftriebseffekt in den Wänden genutzt werden.

Die für die Druckflächen vorgesehenen Anschläge können an der Welle über deren Länge verteilt angeordnet sein, um eine gleichmäßige Belastung auf die Ränder der Druckflächen zu erreichen. Dadurch können die Druckflächen leichter und weniger stabil ausgeführt werden, ohne dass die Dauerhaltbarkeit verringert werden würde. Zudem verformen sich die Druckflächen bei einer nahezu kompletten Anlage über die Länge vernachlässigbar, wodurch die Konstruktion stabiler und der Wirkungsgrad verbessert wird.

Weiterhin können die Anschläge auf hervorstehenden Trägern an der Welle befestigt sein und ggf. eine Dämpfereinrichtung aufweisen oder aus einem Dämpfermaterial bestehen. Vorteilhaft bei diesen Ausführungsformen ist, dass beim Umschlagen der Druckflächen die Kraft auf die gesamte Breite der Welle verteilt wird und der Impuls beim Auftreffen der sich anlegenden Druckflächen gedämpft wird und somit selbst bei starken Strömungen die Gefahr einer Beschädigung minimiert wird. Darüber hinaus werden durch die Ausgestaltung der Anschläge mit Dämpfern oder als Dämpfer die Schallemissionen verringert, wodurch schallempfindliche Lebewesen in ihrem Lebensraum weniger beeinträchtigt werden.

Weiterhin kann an die erfindungsgemäße Vorrichtung ein Generator mit der Antriebswelle direkt oder über ein Getriebe verbunden sein.

Eine Weiterbildung der Erfindung sieht vor, dass die Welle, die Anschläge, die Ausleger und/oder Tragkörper eine Wölbung aufweisen, die in Richtung auf die Druckflächen gerichtet ist. Durch die jeweilige Wölbung in Richtung auf die Druckflächen ergibt sich eine die Strömung leitende Kontur dergestalt, dass der Strömungsquerschnitt in Richtung auf die an den Anschlägen anliegenden Druckflächen verringert wird, so dass eine Erhöhung der Anströmgeschwindigkeit oder des Anströmdruckes erreicht werden kann. Die Welle oder die Anschläge weisen dabei eine tonnenförmige Kontur, die Tragkörper eine kegelige, kalottenartige oder gerundete Form und die Ausleger eine in Richtung auf die Lagerstellen der Welle sich verjüngende Kontur auf.

Die Erfindung wird anhand von in den Figuren dargestellten Ausführungsbeispielen näher erläutert. Gleiche Bezugszeichen in den Figuren bezeichnen gleiche Komponenten. Es zeigen:
- Figur 1: eine Vorrichtung in Draufsicht;
- Figur 2: eine Seitenansicht der Vorrichtung gemäß Figur 1;
- Figur 3: eine perspektivische Darstellung der Vorrichtung gemäß Figur 1;
- Figur 4: eine perspektivische Darstellung der Figur 2;
- Figur 5: eine perspektivische Darstellung eine Variante der Vorrichtung;
- Figur 6: eine Seitenschnittansicht eines Auftriebkörpers gemäß Figur 5;
- Figur 7: eine Einzeldarstellung einer Strömungsleiteinrichtung;
- Figur 8: eine perspektivische Gesamtansicht der Strömungsleiteinrichtung;
- Figur 9: eine Vorderansicht der Figur 8;
- Figur 10: eine Draufsicht der Figur 8;
- Figur 11: eine Einzeldarstellung einer Anschlaghülse;
- Figur 12: eine Variante der Tragkörper an der Welle; sowie
- Figur 13: eine Variante der Welle und Anschläge.

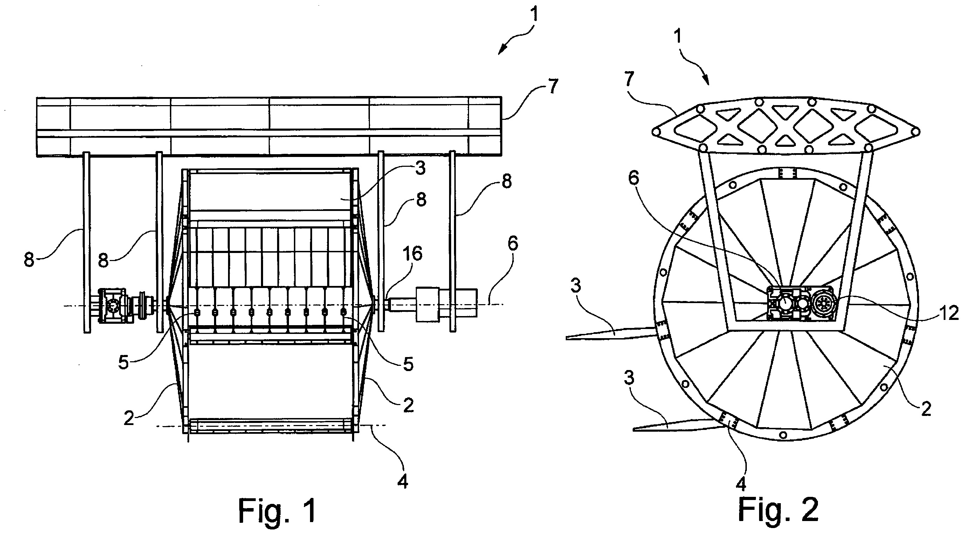

In der Figur 1 ist in einer Frontalansicht eine Vorrichtung 1 zur Nutzbarmachung kinetischer Energie eines strömenden Mediums, insbesondere Wasser, gezeigt. Die Vorrichtung 1 sieht zwei Tragkörper 2 in Gestalt von Tragscheiben vor, die beabstandet zueinander drehbar um eine Drehachse 6 und drehfest mit einer Welle 16 verbunden sind. Die Welle 16 ist an insgesamt vier Auslegern 8 gelagert, die sich radial zu der Welle 16 erstrecken. Die Ausleger 18 sind über eine Strömungsleiteinrichtung 7, die radial außerhalb der Tragkörper 2 angeordnet ist, verbunden. Die Strömungsleiteinrichtung 7 bildet zusammen mit den Auslegern 8 ein brückenartiges Gestellt aus, in dem sowohl die Welle 16 als auch die beiden Tragkörper 2 drehbar gelagert sind.

Zwischen den beiden Tragkörpern 2 sind Druckflächen 3 angeordnet, die gleichmäßig um den Umfang der Tragkörper 2 angeordnet sind. Die Druckflächen 3 sind schwenkbar um Achsen 4 gelagert und stützen sich mit derjenigen Kante, die von der Drehachse 4 entfernt ausgebildet ist, an Anschlägen 5 ab, die auf der Welle 16 angeordnet sind.

In der Figur 1 ist die Vorrichtung 1 in dem Betriebszustand gezeigt, in dem die Vorrichtung 1 schwimmend in einer Strömung angeordnet ist, beispielsweise in einem Flusslauf oder in einer Gezeitenströmung. Dabei sind sowohl die Drehachse 6 als auch die Längserstreckung des Strömungsleiteinrichtung 7 im Wesentlichen waagerecht orientiert, die Achsen 4 der Druckflächen 3 sind parallel zu der Drehachse 6 ausgerichtet. Die Anschläge 5 sind gleichmäßig über den gesamten Zwischenraum zwischen den Tragkörpern 2 angeordnet und können als Vorsprünge mit darauf angeordneten Dämpferelementen ausgebildet sein. Durch die Ausbildung als Vorsprünge ist es möglich, dass die Druckflächen 3 beidseitig an den Anschlägen 5 anschlagen können, so dass ein Umkehrbetrieb bei wechselnder Strömungsrichtung ohne Umbaumaßnahmen möglich ist. Die Anschläge 5 liegen vorteilhafterweise auf der Verbindungslinie zwischen der jeweiligen Achse 4 der zugeordneten Druckfläche 3 und der Achse 6.

In der Figur 1 ist eine Strömungssituation dargestellt, bei der die Strömung senkrecht zur Blattebene in die Blattebene hinein orientiert ist. Diejenigen Druckflächen 3, die unterhalb der Drehachse 6 positioniert sind, richten sich im Wesentlichen waagerecht in die Strömung aus, die Druckflächen 3, die oberhalb der Drehachse 6 befindlich sind, werden durch die Strömung gegen die Anschläge 5 gedrückt und bilden dadurch eine Widerstandsfläche aus, über die die Tragkörper 3 und damit die Welle 16 in Drehung versetzt wird.

Die Strömungsleiteinrichtung 7 oberhalb der Tragkörper 2, also radial zu den Tragkörpern 2 beabstandet, leitet das anströmende Fluid, überwiegend Wasser, in Richtung auf die Druckflächen 3, die wirksam in der Strömung stehen, so dass sich eine Strömungsgeschwindigkeitserhöhung aufgrund eines sich verengenden Querschnittes in Strömungsrichtung auf die Druckflächen 3 ergibt. Dadurch ist es möglich, der Vorrichtung 1 einen höheren Wirkungsgrad zu verleihen.

In der Figur 2 ist eine seitliche Schnittdarstellung gezeigt, bei der ein Teil der Strömungsleiteinrichtung 7 weggeschnitten ist. Es ist zu erkennen, dass die Strömungsleiteinrichtung 7 klappsymmetrisch zu einer Ebene senkrecht durch die Drehachse 6 ausgebildet ist und eine Wölbung in Richtung auf die Tragkörper 2 aufweist, so dass anströmendes Wasser in Richtung auf die Druckflächen 3 geleitet werden. In der Figur 2 ist zu erkennen, dass die unteren Druckflächen 3 im Wesentlichen waagerecht orientiert in der Strömung liegen, die im dargestellten Ausführungsbeispiel von rechts anströmt. Die Strömungsleiteinrichtung 7 weist sowohl eine in Richtung auf die Drehachse 6 hin als auch davon weg orientierte Wölbung auf, so dass sich eine symmetrische, tragflächenartige oder elliptische Querschnittskontur einstellt. Die Strömungsleiteinrichtung 7 kann als Hohlkörper ausgebildet sein, so dass durch Befüllen mit einem relativ leichten Medium, insbesondere Luft, die Auftriebseigenschaften der Vorrichtung 1, die schwimmend verankert werden kann, verändert werden können.

Innerhalb des Auslegers 8, der als U-förmiger Träger an der Unterseite der Strömungsleiteinrichtung 7 befestigt ist, ist neben der Lagerung für die Welle 16 auch ein Getriebe 12 angeordnet, um die von der Welle 16 abgegriffene Drehzahl zu verändern, insbesondere zu erhöhen.

In der Seitenansicht gemäß Figur 2 ist zu erkennen, dass die Druckflächen 3 einseitig an dem äußeren Umfang des Tragkörpers 2 gelenkig und verschwenkbar um die Achsen 4 gelagert sind. Die Tragkörper 2 sind im dargestellten Ausführungsbeispiel kreisförmig ausgebildet und weisen eine scheibenartige Struktur auf, so dass innerhalb der Tragkörper 2 ebenfalls ein Hohlraum gebildet sein kann, um ein Auftriebspotenzial bereitstellen zu können. Die Strömungsleiteinrichtung 7 befindet sich im Betriebszustand stets oberhalb der Tragkörper 2, so dass der minimale Abstand zu dem Tragkörper 2 durch den maximalen Radius des Tragkörpers 2 um die Drehachse 6 definiert wird. Die Unterseite der Strömungsleiteinrichtung 7, also diejenige Seite, die der Drehachse 6 zugewandt ist, ist im dargestellten Ausführungsbeispiel mit einem geringen Abstand zu dem Umfang des Tragkörpers 2 angeordnet. Die Strömungsleiteinrichtung 7 ist steif ausgebildet und stellt einen Träger oder ein Brückenelement für die Lagerung der Tragkörper 2 mit den Druckflächen 3 dar.

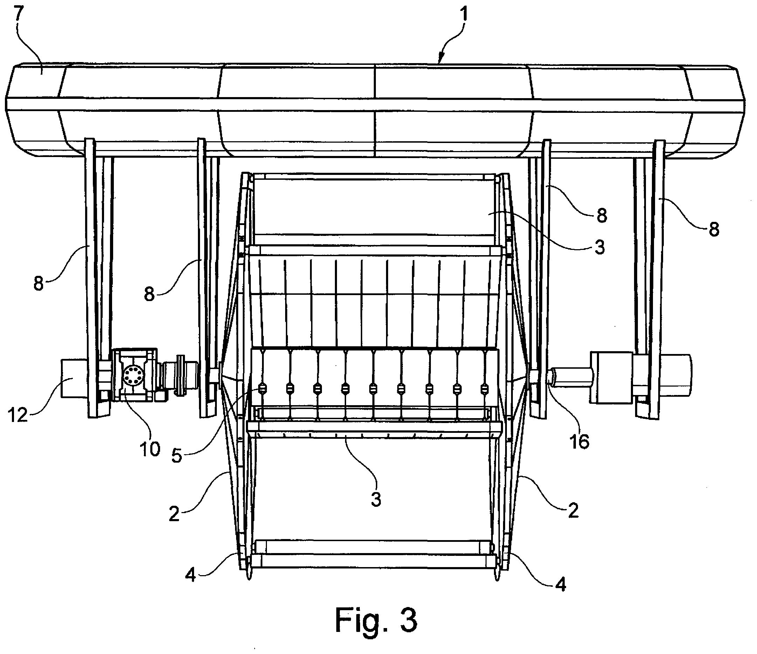

In der Figur 3 ist eine perspektivische Ansicht der Vorrichtung 1 gemäß Figur 1 dargestellt, bei der neben dem Getriebe 12 ein Generator 10 mit an dem äußeren Ausleger 8 befestigt ist, um die Drehbewegung der Welle 16 unmittelbar in elektrische Energie umwandeln zu können. In der Figur 3 sind die Anschläge 5 mit den Dämpfereinrichtungen zu entnehmen, ebenso wie die tragflächenartig gewölbte, symmetrische Ausgestaltung der Unterseite der Strömungsleiteinrichtung 7 in Richtung auf die Druckflächen 3.

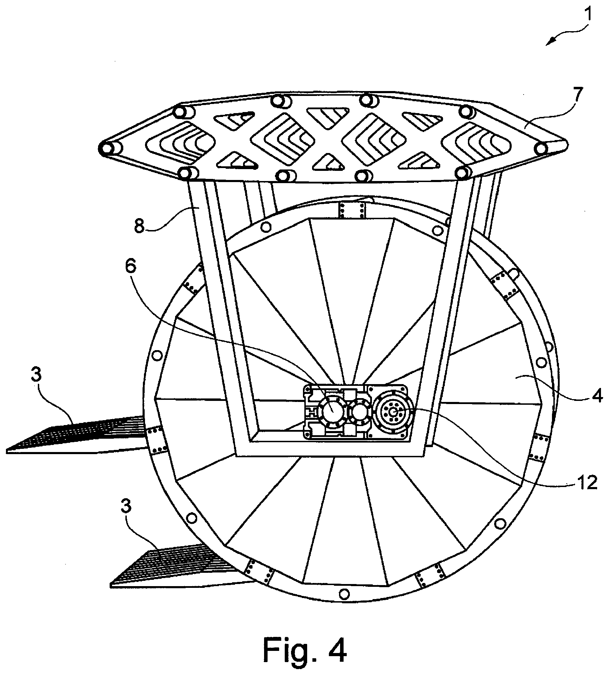

Figur 4 zeigt eine perspektivische Schnittdarstellung analog zur Figur 2, aus der zu erkennen ist, dass eine Vielzahl von Tragwerkelementen, die hintereinander, also in Längserstreckung der Drehachse 6 nebeneinander, angeordnet sind. Auf der Außenseite der Tragwerkelemente ist eine Außenhülle aufgebracht, die einen Hohlraum ausbildet, so dass die Strömungsleiteinrichtung 7 gleichzeitig als Auftriebskörper dient.

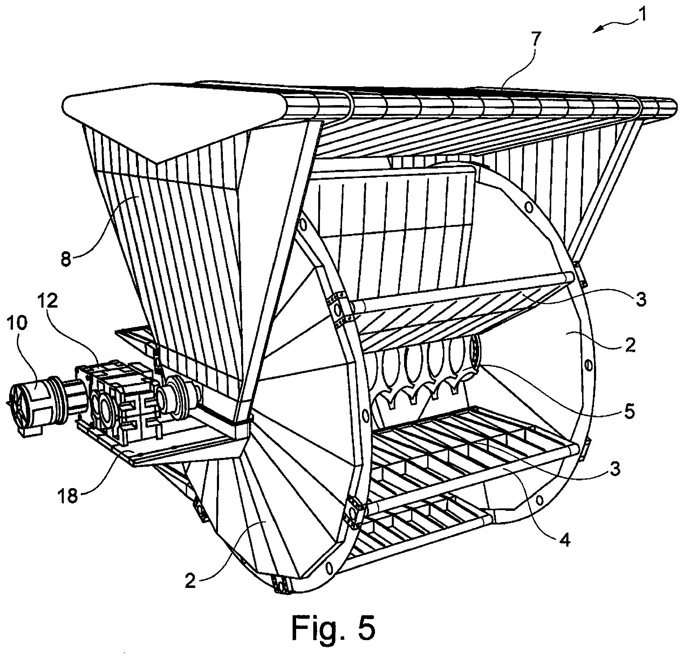

In der Figur 5 ist eine Variante der Erfindung gezeigt, bei der die Strömungsleiteinrichtung 7 und die Ausleger 8 abweichend von der Ausführungsform der Figuren 1 bis 4 ausgebildet sind. Die Strömungsleiteinrichtung 7 erstreckt sich weiterhin über die gesamte Breite der Druckflächen 3 hinaus, an den Enden der Strömungsleiteinrichtung 7 sind Wände als Ausleger 8 angeordnet, die sich von den jeweiligen Vorderkanten 17 verjüngend in Richtung auf die Welle 16 erstrecken. Unterhalb der Drehachse 6 sind Auflager 18 angeordnet oder ausgebildet, die parallel zur Orientierung der Drehachse 6 verlaufen und das Getriebe 12 und den Generator 10 sowie die Lagerungen für die Welle 16 aufnehmen. Die Ausleger 8 sind als geschlossene Wände ausgebildet und können eine Auftriebsfunktion wahrnehmen. Die Strömungsleiteinrichtung 7, die brückenartig über den Tragkörpern 2 und Druckflächen 3 angeordnet ist, weist eine winklige Kontur auf, wobei die Unterseite der Strömungsleiteinrichtung 7 geneigt ausgebildet ist. Die winklig zueinander gerichteten Flächen der Unterseite treffen sich in der Mitte der Ausleger 8, die Oberseite der Strömungsleiteinrichtung 7 kann eine Wölbung aufweisen oder eine leichte winklige Kontur ausbilden.

Die Einheit aus der Strömungsleiteinrichtung 7 und den Auslegern 8 kann einteilig ausgebildet sein, so dass eine Art Joch entsteht, in dem die Tragkörper 2 und die Welle 16 gelagert sein können. Durch die Ausbildung der Strömungsleiteinrichtung 7 als Auftriebskörper, sei es durch Ausbildung eines Hohlkörpers innerhalb der Strömungsleiteinrichtung 7 oder durch die Verwendung spezifisch leichter Materialien, wird der Abstand zwischen dem Auftriebsschwerpunkt und dem Massenschwerpunkt der Vorrichtung 1 vergrößert, wodurch sich eine sehr stabile Lage der Vorrichtung 1 innerhalb der Strömung ergibt. Die Vorrichtung 1 kann durch die Ausgestaltung der Strömungsleiteinrichtung 7 als Auftriebskörper schwimmend in einer Strömung gelagert werden, durch die waagerechte Ausgestaltung der Drehachse 6 richtet sich die Vorrichtung 1 stets optimal in die Strömung aus, so dass keine externen Anpassungsmaßnahmen notwendig sind. Die Vorrichtung 1 selbst ist im Wesentlichen symmetrisch ausgebildet, das heißt, dass die Strömungsleiteinrichtung 7 aus beiden Anströmrichtungen gleich aussieht. Auch die Tragkörper 2 sind für reversierenden Drehbetrieb ausgebildet.

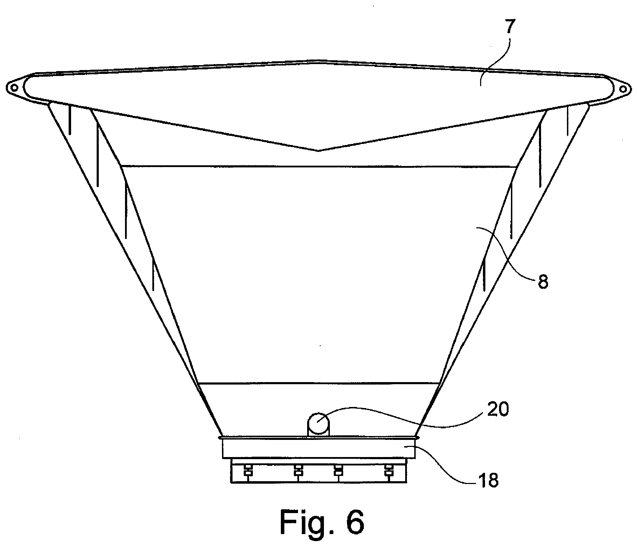

In der Figur 6 ist eine Seitenansicht der Strömungsleiteinrichtung 7 mit einer Wand als Ausleger 8 und dem Träger 18 dargestellt. Innerhalb des Auslegers 8 ist eine Durchgangsöffnung 20 für die nicht dargestellte Welle ausgebildet. Die klappsymmetrische Ausgestaltung bezüglich einer Ebene senkrecht durch die Bohrung 20 für die Welle 16 ist ebenso zu erkennen wie die geneigte Ausgestaltung der Unterseite der Strömungsleiteinrichtung von den jeweiligen Vorderkanten 17 bis zur Mitte der Strömungsleiteinrichtung 7. Der tiefste Punkt der Unterseite der Strömungsleiteinrichtung liegt dabei in der Mittelebene und dem größten Radius der Tragkörper 2 gegenüber.

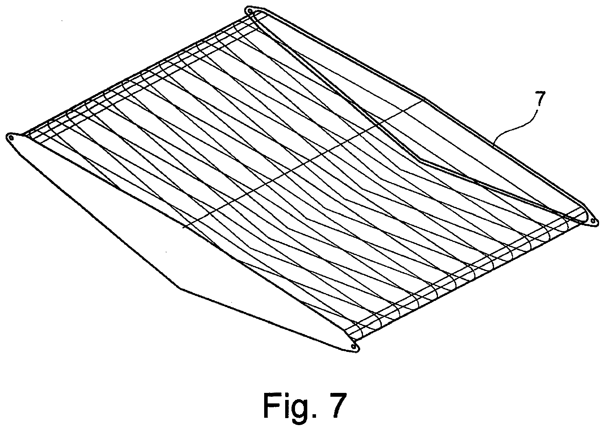

In der Figur 7 ist die Strömungsleiteinrichtung 7 ohne Ausleger dargestellt. Die Seitenwände sind als angenähert dreieckige Profile ausgebildet, innerhalb der Strömungsleiteinrichtung sind Tragkörper angeordnet, um eine mechanische Versteifung zu ermöglichen.

Die Tragkörper werden mit einer geschlossenen Hülle verkleidet, um einen inneren Hohlraum auszubilden.

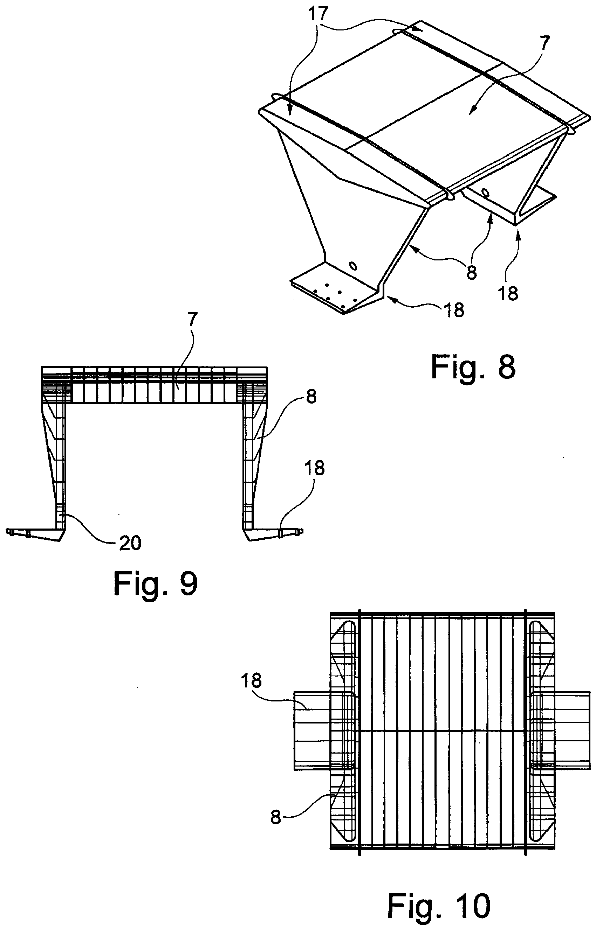

Figur 8 zeigt eine perspektivische Darstellung der Strömungsleiteinrichtung 7 mit den Auslegern 8 und den daran befindlichen Trägern 18, Figur 9 eine schematische Frontalansicht der Figur 8, an der die jochartige Ausgestaltung der Strömungsleiteinrichtung in Verbindung mit den Auslegern 8 und den Trägern 18 für die Lagerung der nicht dargestellten Welle zu erkennen ist.

Die Figur 10 zeigt eine Draufsicht auf die Strömungsleiteinrichtung 7, in der zu erkennen ist, dass die Träger 18 über die Seitenkanten der Strömungsleiteinrichtung 7 hinausragen. Die Kontur der Strömungsleiteinrichtung 7 erstreckt sich über die gesamte Breite und damit über den Zwischenraum zwischen den Auslegern 8 hinaus.

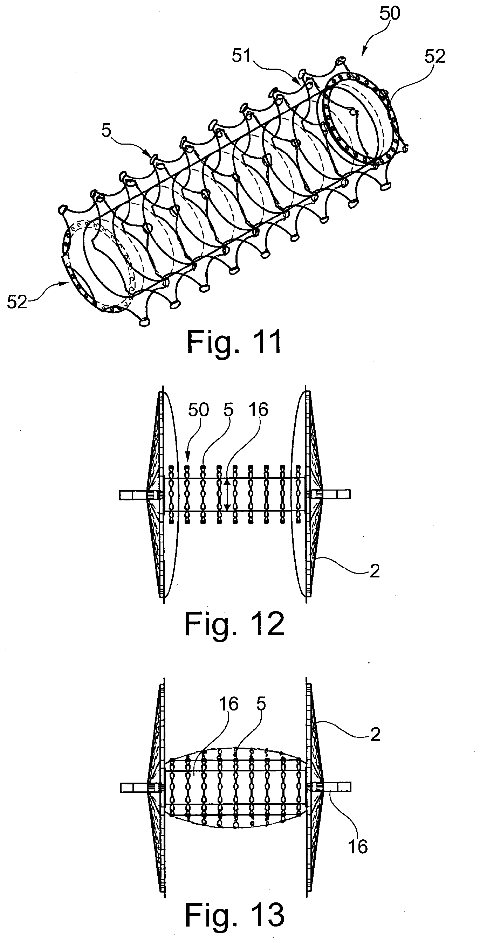

In der Figur 11 ist in einer Einzeldarstellung eine Hülse 50 zur Montage auf einer nicht dargestellten Welle 16 gezeigt. Die Hülse 50 weist an ihrer Außenseite die als Dämpfer ausgebildeten Anschläge 5 auf, die auf einer Linie parallel zur Mittellinie oder Zentralachse der Hülse 50 entlang deren Längserstreckung angeordnet sind. Die Anschläge 5 können als Dämpferelemente in Gestalt von Nylonstoppern ausgebildet sein, die an Vorsprüngen sternartiger Scheiben 51 angeordnet sind. Die sternartigen Scheiben 51 sind mit einer zentralen Ausnehmung versehen und hintereinander zur Ausbildung der Hülse 50 miteinander verbunden. An den stirnseitigen Enden sind Flansche 52 angeordnet, um die Hülse 50 sicher auf der Welle 16 zu halten.

In der Figur 12 ist eine solche Hülse 50 montiert auf der Welle 16 zwischen den beiden Tragkörpern 2 dargestellt. Die Hülse 50 weist eine im Wesentlichen zylindrische Außenkontur auf, von der die Anschläge 5 hervorragen. Die Tragkörper 2 weisen sowohl eine nach außen gerichtete als auch zu der Hülse 50 hin gerichtete Aufwölbung oder Abschrägung auf, so dass sich der Strömungsquerschnitt in Richtung auf die Welle 16 verringert. Die Innenseiten, also diejenigen Seiten der Trägkörper 2, die den nicht dargestellten Druckflächen zugewandt ist, laufen kegelförmig oder kalottenförmig in Richtung auf die Welle 16 zu, so dass sich eine strömungsleitende Kontur ergibt. Dadurch wird eine Verringerung des Strömungsquerschnittes zwischen den beiden einander gegenüberliegenden Tragkörpern 2 die Strömungsgeschwindigkeit im Bereich der Welle 16 vergrößert.

Eine Variante der Erfindung ist in der Figur 13 gezeigt, bei der die Tragkörper 2 zur Welle 16 hin gerichteten Innenseite eine geradwandige Kontur aufweisen, während die Kontur der Welle 16 und damit auch der Anschläge 15 tonnenförmig ausgestaltet ist, also von der Drehachse 6 weg gewölbt ist. Auch dadurch wird eine Strömungsquerschnittsverengung bewirkt, was zu einer Vergrößerung des Wirkungsgrades führen kann.

## Patentansprüche

1. Vorrichtung zur Nutzbarmachung kinetischer Energie eines strömenden Mediums mit um eine horizontale Drehachse (6) an einer Welle (16) gelagerten, axial zueinander beabstandeten Tragkörpern (2), zwischen denen Druckflächen (3) angeordnet sind, die um eine Achse (4) an den Tragkörpern (2) schwenkbar gelagert sind und sich an Anschlägen (5), die die Schwenkbewegung begrenzen, abstützen, wobei radial beabstandet zu den Druckflächen (3) eine als Auftriebskörper ausgebildete Strömungsleiteinrichtung (7) angeordnet ist, die zusammen mit den Druckflächen (3) eine den Strömungsquerschnitt zwischen den Druckflächen (3) und der Strömungsleiteinrichtung (7) verengende Kontur ausbildet **dadurch gekennzeichnet, dass** die Strömungsleiteinrichtung (7) symmetrisch zu einer Ebene ist, die die Drehachse (6) enthält und im Wesentlichen senkrecht zu der Strömungsrichtung des Mediums steht.

2. Vorrichtung nach Anspruch 1, **dadurch gekennzeichnet, dass** die Strömungsleiteinrichtung (7) eine Wölbung in Richtung auf die Drehachse (6) aufweist.

3. Vorrichtung nach Anspruch 1 oder 2, **dadurch gekennzeichnet, dass** die Strömungsleiteinrichtung (7) sich über beide Tragkörper (2) hinweg erstreckt.

4. Vorrichtung nach einem der voranstehenden Ansprüche, **dadurch gekennzeichnet, dass** von der Strömungsleiteinrichtung (7) Ausleger (8) abkragen, an denen die Welle (16) gelagert ist.

5. Vorrichtung nach Anspruch 4, **dadurch gekennzeichnet, dass** die Ausleger (8) als Wände ausgebildet sind.

6. Vorrichtung nach Anspruch 5, **dadurch gekennzeichnet, dass** die Ausleger (8) als Auftriebskörper ausgebildet sind.

7. Vorrichtung nach einem der voranstehenden Ansprüche, **dadurch gekennzeichnet, dass** die Anschläge (5) an der Welle (16) über deren Länge verteilt angeordnet sind.

8. Vorrichtung nach einem der voranstehenden Ansprüche, **dadurch gekennzeichnet, dass** die Anschläge (5) auf hervorstehenden Trägern an der Welle (16) befestigt sind.

9. Vorrichtung nach einem der voranstehenden Ansprüche, **dadurch gekennzeichnet, dass** die Anschläge (5) eine Dämpfereinrichtung aufweisen oder aus einem Dämpfermaterial bestehen.

10. Vorrichtung nach einem der voranstehenden Ansprüche, **dadurch gekennzeichnet, dass** ein Generator (10) mit der Welle (16) direkt oder über ein Getriebe (12) gekoppelt ist.

11. Vorrichtung nach einem der voranstehenden Ansprüche, **dadurch gekennzeichnet, dass** die Welle (16), Ausleger (8) und/oder Tragkörper (2) eine Wölbung aufweisen, die in Richtung auf die Druckflächen (3) gerichtet ist.

## Claims

1. A device for utilizing kinetic energy of a flowing medium, with support members (2) which are mounted on a shaft (16) about a horizontal axis of rotation (6) and are spaced apart axially from each other, and between which there are arranged pressure surfaces (3) that are mounted on the support members (2) so as to be able to pivot about an axis (4) and that bear against stops (5) which limit the pivoting movement, whereas, spaced radially from the pressure surfaces (3), there is arranged a flow guiding device (7) which is designed as a buoyancy member and forms, together with the pressure surfaces (3), a contour that narrows the flow cross section between the pressure surfaces (3) and the flow guiding device (7), **characterized in that** the flow guiding device (7) is arranged symmetrically with respect to a plane, which includes the axis of rotation (6) and which is essentially perpendicular with respect to the flow direction of the medium.

2. The device as claimed in claim 1, **characterized in that** the flow guiding device (7) is curved in the direction of the axis of rotation (6).

3. The device as claimed in claim 1 or 2, **characterized in that** the flow guiding device (7) extends above both support members (2).

4. The device as claimed in one of the preceding claims, **characterized in that** arms (8), on which the shaft (16) is mounted, project from the flow guiding device (7).

5. The device as claimed in claim 5, **characterized in that** the arms (8) are designed as walls.

6. The device as claimed in claim 6, **characterized in that** the arms (8) are designed as buoyancy members.

7. The device as claimed in one of the preceding claims, **characterized in that** the stops (5) are arranged on the shaft (16), distributed over the length of the latter.

8. The device as claimed in one of the preceding claims, **characterized in that** the stops (5) are attached to the shaft (16) on projecting supports.

9. The device as claimed in one of the preceding claims, **characterized in that** the stops (5) have a damping device or are made of a damping material.

10. The device as claimed in one of the preceding claims, **characterized in that** a generator (10) is coupled to the shaft (16), either directly or via a transmission (12).

11. The device as claimed in one of the preceding claims, **characterized in that** the shaft (16), arms (8) and/or support bodies (2) have a curvature which is oriented toward the pressure surfaces (3).

## Revendications

1. Dispositif pour exploiter l'énergie cinétique d'un milieu en écoulement, comprenant des corps porteurs (2) écartés axialement les uns des autres et montés sur un arbre (16) autour d'un axe de rotation horizontal (6), corps entre lesquels sont agencées des surfaces de pressage (3) qui sont montées en pivotement autour d'un axe (4) sur les corps porteurs (2) et qui s'appuient sur des butées (5) qui limitent le mouvement de pivotement, dans lequel un moyen de guidage d'écoulement (7) réalisé sous forme de corps de flottaison est agencé radialement à distance des surfaces de pressage (3), ledit moyen réalisant, conjointement avec les surfaces de pressage (3), un contour qui rétrécit la section d'écoulement entre les surfaces de pressage (3) et le moyen de guidage d'écoulement (7), **caractérisé en ce que** le moyen de guidage d'écoulement (7) est symétrique par rapport à un plan qui contient l'axe de rotation (6) et qui se dresse sensiblement perpendiculairement à la direction d'écoulement du milieu.

2. Dispositif selon la revendication 1, **caractérisé en ce que** le moyen de guidage d'écoulement (7) comporte un bombement en direction de l'axe de rotation (6).

3. Dispositif selon la revendication 1 ou 2, **caractérisé en ce que** le moyen de guidage d'écoulement (7) s'étend au-delà des deux corps porteurs (2).

4. Dispositif selon l'une des revendications précédentes, **caractérisé en ce que** des bras (8), sur lesquels l'arbre (16) est monté, s'étendent en porte-à-faux depuis le moyen de guidage d'écoulement (7).

5. Dispositif selon la revendication 4, **caractérisé en ce que** les bras (8) sont réalisés sous forme de parois.

6. Dispositif selon la revendication 5, **caractérisé en ce que** les bras (8) sont réalisés sous forme de corps de flottaison.

7. Dispositif selon l'une des revendications précédentes, **caractérisé en ce que** les butées (5) sont agencées sur l'arbre (16) de façon répartie sur sa longueur.

8. Dispositif selon l'une des revendications précédentes, **caractérisé en ce que** les butées (5) sont fixées sur l'arbre (16) sur des supports en projection.

9. Dispositif selon l'une des revendications précédentes, **caractérisé en ce que** les butées (5) comprennent un moyen d'amortissement ou sont constituées en un matériau amortissant.

10. Dispositif selon l'une des revendications précédentes, **caractérisé en ce qu'**un générateur (10) est couplé à l'arbre (16) soit directement soit via une transmission (12).

11. Dispositif selon l'une des revendications précédentes, **caractérisé en ce que** l'arbre (16), les bras (8) et/ou les corps porteurs (2) présentent un bombement qui est orienté en direction des surfaces de pressage (3).
